# FASCICULE DE BREVET EUROPEEN

(11) **EP 2 577 033 B1**
(45) Date de publication et mention de la délivrance du brevet: **09.04.2014**
(21) Numéro de dépôt: 11727246.8
(22) Date de dépôt: 20.05.2011
(51) Int. Cl.: F02K 1/72, F02K 1/76, F02K 1/09

(54) **INVERSEUR DE POUSSÉE À SECTION DE TUYÈRE VARIABLE VERROUILLABLE**
SCHUBUMKEHRER MIT VERRIEGELBAREM VARIABLEM DÜSENABSCHNITT
THRUST REVERSER HAVING A LOCKABLE VARIABLE NOZZLE SECTION

(30) Priorité: 03.06.2010 FR 1054324
(43) Date de publication de la demande: 10.04.2013
(73) Titulaire: Aircelle, 76700 Gonfreville L'Orcher (FR)
(72) Inventeur: VAUCHEL, Guy, Bernard, F-76700 Harfleur (FR); JORET, Jean-Philippe, F-27210 Beuzeville (FR); LE BOULICAUT, Loïc, F-76610 Le Havre (FR); AVENEL, Philippe, F-76310 Sainte Adresse (FR)
(74) Mandataire: Gaillarde, Frédéric F. Ch.
(86) Numéro de dépôt international: PCT/FR2011/051151
(87) Numéro de publication internationale: WO 2011/151563

(56) Documents cités:
- EP-A1- 1 457 660
- FR-A1- 2 358 555
- FR-A1- 2 622 929
- US-A- 3 797 785
- US-A- 5 720 449

## Description

La présente invention se rapporte à une nacelle pour moteur d'aéronef équipée d'un dispositif d'inversion de poussée prolongé par un dispositif de tuyère à section variable.

Un avion est mu par plusieurs turboréacteurs logés chacun dans une nacelle servant à canaliser les flux d'air générés par le turboréacteur qui abrite également un ensemble de dispositifs d'actionnement annexes liés à son fonctionnement et assurant diverses fonctions lorsque le turboréacteur est en fonctionnement ou à l'arrêt.

Ces dispositifs d'actionnement annexes comprennent, notamment, un système mécanique d'inversion de poussée et un système de tuyère variable.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinés à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles, la translation du capot mobile s'effectuant selon un axe longitudinal sensiblement parallèle à l'axe de la nacelle. Des portes de blocage complémentaires, activées par le coulissement du capotage, permettent généralement une fermeture de la veine en aval des grilles de manière à optimiser la réorientation du flux froid.

Outre sa fonction d'inversion de poussée, le capot coulissant appartient à la section arrière et présente un côté aval formant une tuyère d'éjection visant à canaliser l'éjection des flux d'air. Cette tuyère peut venir en complément d'une tuyère primaire canalisant le flux chaud et est alors appelée tuyère secondaire.

Les performances de l'inversion de poussée sont obtenues de manière satisfaisante avec les dispositifs connus. Toutefois, pour des raisons d'optimisation aérodynamique, et par là même d'optimisation de la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle).

Un tel système est décrit dans le document FR 2 622 929 ou encore FR 2 902 839 par exemple.

Ces documents décrivent la mise en oeuvre d'inverseurs de poussée à grilles équipés d'une section d'éjection variable et prévoit pour ce faire un capot mobile comprenant deux parties aptes à être reliées entre elles par des moyens de verrou.

Selon les modes de réalisation, la tuyère variable peut être réalisée à partir d'un ou plusieurs éléments mobiles dédiés, tels que des volets pivotants ou portion de capot translatable ou cette fonction peut être remplie par le capot mobile lui-même par des mouvements de translation de faible amplitude n'activant pas la fonction d'inversion de poussée.

Pour une description approfondie et détaillée de différents modes de réalisation, on pourra se reporter aux documents FR 2 922 058, FR 2 902 839, FR 2 922 059, entre autres, ainsi que US 5 720 449 et FR 2 358 555.

Les phases de fonctionnement de la tuyère variable et de l'inverseur de poussée sont distinctes, la tuyère variable ne pouvant fonctionner lorsque l'inverseur est activé à l'atterrissage. Réciproquement, l'inverseur de poussée ne doit pas fonctionner lorsque la section de tuyère variable est en cours de manoeuvre.

Par ailleurs, la tuyère adaptative est située dans le prolongement aval du capot d'inversion de poussée, et il importe de pouvoir actionner ces deux parties de la nacelle de manière indépendante : on veut en particulier pouvoir augmenter la section de la tuyère adaptative sans actionner les moyens d'inversion de poussée, en particulier lors du décollage.

Pour réaliser cet actionnement indépendant, chaque partie mobile (inverseur / tuyère) peut classiquement être équipée de son propre actionneur (deux actionneurs simple tige ou un vérin double tige, par exemple) et être entraînée de manière indépendante.

Afin d'alléger l'énsemble d'entraînement, il est possible d'utitiser un unique actionneur simple tige, en prévoyant des moyens de verrouillage complémentaire entre les parties mobiles.

Une telle solution et quelques principes de mise en oeuvre sont présentés dans le document FR 2 902 839, notamment aux figures 13 à 15.

La présente invention vise un tel système de verrouillage entre une partie mobile d'inverseur et une partie mobile de tuyère pour un actionnement à l'aide d'au moins un vérin simple tige.

Il convient de noter que bien que plus particuliérément destiné à un système d'actionnement par vérin simple tige, l'invention n'est pas limitée à ce type de moyen d'entraînement et en est indépendant, le verrouillage des deux structures mobiles entre elles pouvant être utilisés avec d'autres types de moyens d'entraînement et peut de plus constituer une ligne de défense supplémentaire dans certains cas.

La présente invention se rapporte à un inverseur de poussée pour nacelle de turboréacteur selon la revendication 1 comprenant d'une part, des moyens de déviation d'au moins une partie d'un flux d'air du turboréacteur, et d'autre part, au moins un capot mobile en translation selon une direction sensiblement longitudinale de la nacelle apte à passer alternativement d'une position de fermeture dans laquelle il assure la continuité aérodynamique de la nacelle et couvre les moyens de déviation, et une position d'ouverture dans laquelle il ouvre un passage dans la nacelle et découvre les moyens de déviation, ledit inverseur de poussée comprenant également au moins une section de tuyère variable disposée dans le prolongement du capot mobile d'inversion de poussée et équipée d'au moins un moyen de verrouillage apte à coopérer avec un moyen de verrouillage complémentaire du capot mobile d'inversion de manière à lier mécaniquement ou non la section de tuyère mobile au capot mobile d'inversion, caractérisé en ce que le moyen de verrouillage et le moyen de verrouillage complémentaire comprennent au moins un cliquet de verrouillage monté mobile à l'encontre d'un moyen de retour élastique entre une position d'engagement dans laquelle il solidarise l'entraînement de la section de tuyère et du capot d'inversion, et une position de dégagement dans laquelle il désolidarise l'entraînement de ladite section de tuyère et dudit capot d'inversion, le moyen de retour élastique tendant à ramener le cliquet dans sa position d'engagement, ledit cliquet étant maintenu en position de dégagement par l'intermédiaire d'au moins un pion monté sur une structure fixe de l'inverseur.

Ainsi, en prévoyant un système de verrouillage activé par un pion, on dispose d'un système de verrouillage mécanique simple, fiable et efficace, ne nécessitant pas de tringleries complexes et permettant de répondre aux exigences ci-dessus mentionnées.

De manière avantageuse, le pion est monté mobile entre une position de maintien du cliquet mobile et une position de retrait, le passage d'une position à l'autre étant associé à une situation de verrouillage ou de déverrouillage du capot mobile d'inversion sur la structure fixe.

Avantageusement, le dispositif comprend un moyen de détection de fin de fermeture du capot mobile d'inversion.

Préférentiellement, l'inverseur de poussée comprend au moins un vérin simple tige présentant une première extrémité monté sur la structure fixe et une deuxième extrémité, d'entraînement, lié à la section de tuyère mobile.

De manière préférentielle, la structure fixe sur laquelle est monté le pion est une poutre longitudinale, et plus particulièrement une poutre dite douze heure.

Préférentiellement, le capot mobile d'inversion est équipé d'au moins un moyen de verrouillage avec une structure fixe de l'inverseur, notamment un cadre avant.

Préférentiellement encore, les moyens de verrouillage sont situés dans une portion aval du capot mobile d'inversion.

Avantageusement, les moyens de verrouillage du capot mobile d'inversion et / ou de la tuyère mobile sont montés sur une structure de guidage dudit capot mobile d'inversion et / ou de tuyère.

Préférentiellement, le moyen de verrouillage comprend au moins une butée articulée ou coulissante, située de préférence sensiblement au centre d'une section de la structure de guidage correspondante le cas échéant.

Avantageusement, le système de verrouillage est situé en partie supérieure mais peut être aussi situé en partie inférieure

Avantageusement encore, au moins un rail de guidage la tuyère variable est en butée aval dans un rail de guidage du capot d'inversion, un jeu fonctionnel de manoeuvre de la butée sur la structure de tuyère de blocage étant prévu

La présente invention se rapporte également à une nacelle de turboréacteur caractérisée en ce qu'elle comprend au moins un inverseur de poussée selon l'invention.

La présente invention sera mieux comprise à la lumière de la description détaillée qui suit en regard du dessin annexé dans lequel :
- la figure 1 est une vue générale en coupe longitudinale d'un dispositif d'inversion de poussée selon l'invention,
- les figures 2 à 8 illustrent schématiquement les différentes étapes de fonctionnement de l'inverseur de poussée de la figure 1,
- les figures 9 et 10 illustrent schématiquement une variante de réalisation de l'inverseur de poussée de la figure 1, le système de verrouillage étant équipé d'un pion mobile.
- les figures 11 et 12 illustrent schématiquement une deuxième variante de réalisation de l'inverseur de poussée de la figure 1, le système de verrouillage étant équipé d'un pion mobile associé à un détecteur de fin de course.

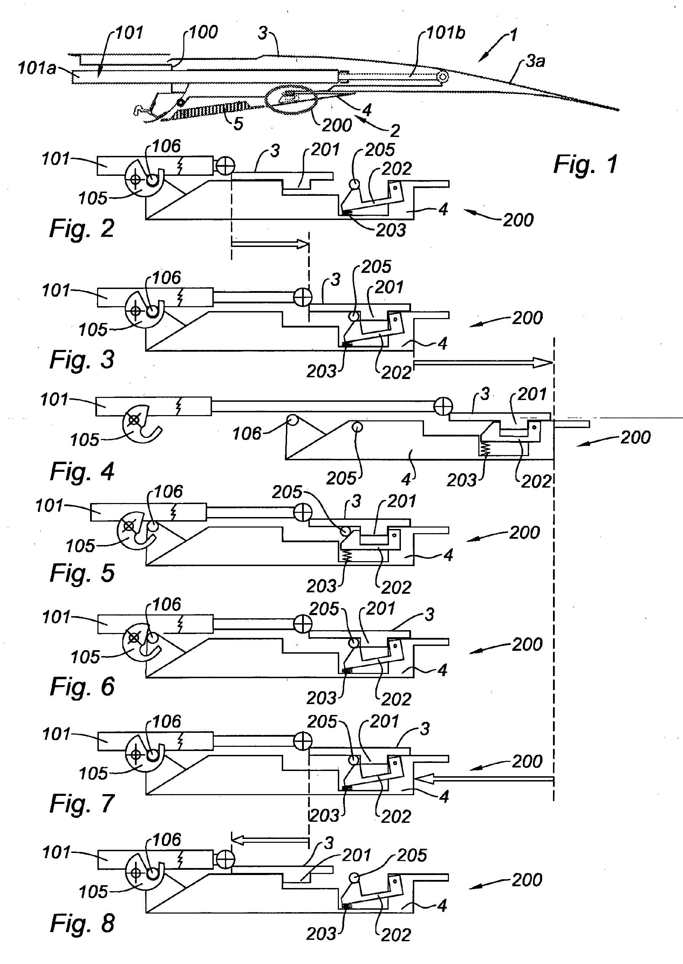

La figure 1 est une vue générale en coupe longitudinale d'un dispositif d'inversion de poussée 1 selon l'invention, tel que notamment décrit dans le document FR 2 902 839.

Le dispositif d'inversion de poussée 1 appartient à une section arrière d'une nacelle (non représentée) de turboréacteur est monté sur un cadre avant 100. La section arrière définiti avec une structure interne de carénage du turboréacteur une veine 2 de circulation d'un flux d'air secondaire.

Le dispositif d'inversion de poussée comprend un capot mobile 3 en translation selon une direction sensiblement longitudinale de la nacelle apte à être entraîner en translation par un vérin 101 simple tige de manière à passer alternativement d'une position de fermeture (fig. 1) dans laquelle il abrite des grilles de déviation (non visibles) et assure la continuité structurelle et aérodynamique de la nacelle, le flux secondaire étant alors éjecté directement à travers la veine 9, à une position d'ouverture dans laquelle il découvre lesdites grilles de déviation, ouvrant alors un passage dans la nacelle, un panneau interne 4 monté également mobile en translation entraînant le pivotement de volets de blocage 5 venant obturer en tout ou partie la veine 2 de manière à forcer l'éjection de flux secondaire à travers les grilles de déviation sensiblement vers l'avion de la nacelle pour générer une contre poussée.

Le vérin 101 simple tige présente une base 101 a monté sur le cadre avant, fixe, et une extrémité mobile 101 b, liée au capot 3 à déplacer.

Par ailleurs, le capot mobile 3 présente une extrémité aval 3a apte à servir de section de tuyère variable.

Pour ce faire, outre les translations de grande amplitude (vérin 101 déployer au maximum) permettant le dégagement des grilles de déviation et l'activation de la fonction d'inversion de poussée, ledit capot mobile 3 effectue des déplacements de faibles amplitudes, n'entraînant pas le dégagement des grilles de déviation ni l'ouverture de la nacelle.

Ainsi, on comprend qu'en cas de fonctionnement en mode inverseur de poussée, le capot mobile 3 et le panneau interne 4 doivent translater vers l'aval de la nacelle dans un mouvement de grande amplitude alors qu'en cas de fonctionnement en mode tuyère variable, seul le capot mobile 3 se déplace selon des mouvement d'amplitude réduite, le panneau interne restant fixe de manière et assure le carénage interne de la veine 2.

Comme exposé dans le document FR 2 902 839, il convient alors de prévoir des moyens de verrouillage amovibles entre le capot mobile 3 et le panneau interne 4.

Ainsi, en mode inversion de poussée, le capot mobile 3 et le panneau interne 4 sont verrouillés ensemble, le panneau interne 4 translatant alors simultanément au capot mobile 3, tandis qu'en mode tuyère variable, le capot mobile 3 et le panneau interne 4 sont déverrouillés, le capot mobile 3 ne pouvant alors plus entraîner le panneau interne 4 qui reste immobile.

Par ailleurs, le panneau interne est lui-même verrouillé sur le cadre avant 100 lorsqu'e la fonction d'inversion de poussée est désactivée. Le verrouillage s'effectue en l'espèce à l'aide d'un crochet 105 apte à venir en prise avec un doigt de verrouillage 106 correspondant

L'objet de la présente invention est de fournir un système de verrouillage simple et fiable comme exposé précédemment.

Pour ce faire, le dispositif d'inversion de poussée 1 est équipé d'un système de verrouillage 200 dont la constitution et le fonctionnement vont maintenant être décrits en détail.

Le système de verrouillage 200 comprend un premier moyen de verrouillage 201 appartenant au capot mobile 3 et apte à coopérer avec un moyen de verrouillage complémentaire 202 du panneau interne 4 de manière à lier mécaniquement ou non le capot mobile 3 et le panneau interne 4 comme expliqué ci-dessus.

En l'espèce, le moyen de verrouillage 201 se présente sous la forme d'un taquet et le moyen de verrouillage complémentaire 202 se présente sous la forme d'un cliquet apte à venir en prise avec le taquet lorsqu'il est en regard de ce dernier. Bien évidemment, le taquet et le cliquet peuvent être disposés à l'inverse sur le panneau interne 4 et le capot mobile 3 respectivement.

Le cliquet 202 est monté mobile à l'encontre d'un moyen de retour élastique se présentant sous la forme d'un ressort 203 tendant à le forcer vers sa position d'engagement.

Enfin, le système de verrouillage comprend un pion 205 monté sur une structure fixe de l'inverseur 1, notamment par exemple, une poutre longitudinale douze heure de maintien (non visible) et le long de laquelle translate le capot mobile 3, ledit pion 205 étant monté de manière à maintenir le cliquet 202 dans sa position de dégagement du taquet 201 à l'encontre du ressort 203.

Les figures 2 à 8 illustrent le fonctionnement du système de verrouillage au cours des diverses phases de fonctionnement du dispositif d'inversion de poussée.

La figure 2 montre le système de verrouillage en position de croisière. Dans cette configuration de vol, seul la tuyère variable est opérationnelle. Le panneau interne 4 est verrouillé sur le cadre avant 100 par l'intermédiaire du crochet 105 engagé avec le doigt de verrouillage 106. Le pion 205, fixe, est situé au niveau du cliquet 202 de verrouillage et le maintien en position de dégagement à l'encontre de son ressort 203. Le taquet 201, solidaire du capot mobile 3 de tuyère, se déplace librement sous l'effet du vérin d'actionnement 101 dans la plage de variation de la tuyère. La section de tuyère est ici réduite au minimum, le taquet venant en butée contre une butée amont.

La figure 3 représente la position extrême opposée, à savoir celle dans laquelle la section de tuyère est maximale, le taquet 201 venant en butée contre une butée aval du panneau interne 4.

Les figures 4 à 7 illustrent le passage en mode inversion de poussée.

Dans cette phase, le panneau interne 4 est désolidarisé du cadre avant 100 par ouverture du crochet 105. Ce faisant, le taquet 201, en reculant encore sous l'effet du vérin 101, entraîne le panneau interne 4. Le cliquet 202 s'éloigne alors du pion 205 fixe qui ne le maintien plus en position d'ouverture contre son ressort 203. Le cliquet 202 bascule donc en position de verrouillage et vient engager le taquet 201, liant le panneau interne 4 au capot mobile 3, entraînant le déplacement simultané des deux structures.

Ainsi, le capot mobile 3 ouvre le passage externe dans la nacelle et découvre les grilles de déviation en même temps que le panneau interne 4 recule et ouvre le passage interne dans la veine 2 de circulation du flux secondaire, ce qui entraînera également le pivotement des volets de blocage 5.

Lorsque la phase d'inversion de poussée est terminée et que le capot mobile 3, avec le panneau interne 4, sont escamotés en position de fermeture de l'inverseur, le cliquet 205, comme représenté sur les figures 5 et 6, revient vers le pion 205 qui va forcer son ouverture de provoquer le désengagement du cliquet 202 avec le taquet 201, désolidarisant ainsi le panneau interne 4 du capot mobile 3.

La fin de la phase d'inversion est complétée, comme représenté sur la figure 7, par le reverrouillage du panneau interne 4 sur le cadre avant 100 par le crochet 105.

La figure 8 montre le retour en configuration de croisière, identique à la figure 1.

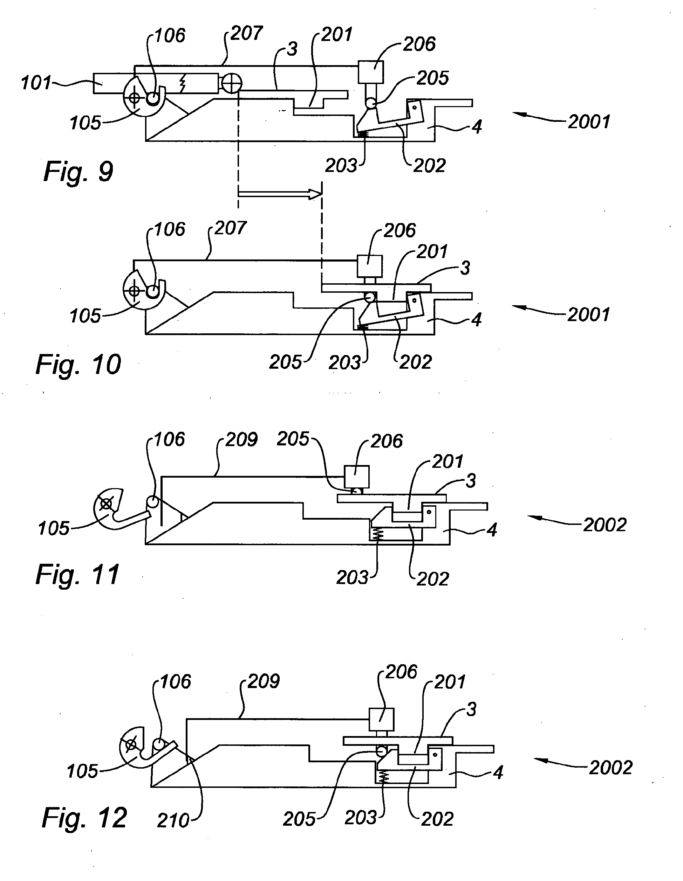

Les figures 9 et 10 montrent une première variante de réalisation du système de verrouillage dans laquelle le pion 205 est monté mobile sur sa structure fixe, et plus précisément rétractable grâce à un actionneur dédié 206.

Cet actionneur 206 est piloté en association avec le crochet 105 de verrouillage sur le cadre avant 100 par une ligne de pilotage 207.

En effet, dans le premier mode de réalisation, on a vu qu'il existait entre le moment où le capot mobile 3 est en butée aval et amorce le passage en phase d'inversion, un court instant où le capot mobile 3 n'est pas verrouillé avec le panneau interne 4, ce dernier devant préalablement s'écarter légèrement du pion 205 fixe non rétractable pour que le cliquet 202 puisse basculer et venir engager le taquet 201.

Grâce à un pion 205 rétractable 206 commandé en association avec le crochet 105, le pion 205 peut être rétracté, et par voie de conséquence, le capot mobile 3 et le panneau interne 4 verrouillés entre eux, dès l'ouverture du crochet 105 signifiant le passage en mode d'inversion de poussée.

On préférera avantageusement une localisation la plus en aval possible du système de verrouillage 2001 afin de fournir une distance suffisante avec le verrouillage du panneau interne 4 sur le cadre avant 100. Ainsi, en cas d'éclatement d'une aube de turbine, le pion 205 pourra servir de troisième ligne de défense en prévoyant notamment une butée complémentaire faisant partie de la structure d'inversion, en l'espèce du panneau interne 4, qui, disposée en amont du système de verrouillage, interdira toute manoeuvre inopinée tant que ledit pion 205 n'est pas escamoté.

Le système de verrouillage 2001 pourra comprendre des capteurs de position complémentaire permettant de confirmer la position des différentes parties mobiles de manière à assurer l'exécution des différentes manoeuvres que lorsque lesdites parties mobiles sont dans les configurations correspondantes afin d'éviter tout risque de détérioration des pièces.

Dans un troisième mode de réalisation schématiquement illustré sur les figures 11 et 12, le système de verrouillage 2002 comprendra en plus du pion 205 rétractable 206, une activation 209 par un moyen de détection 210 de fin de course de fermeture (figure 12). Ceci permet d'obtenir une butée d'attaque de rampe du cliquet 202 au lieu d'utiliser le pion 205 comme poussoir pour forcer le cliquet 202.

En effet, dans le deuxième mode de réalisation, le pion 205 rétractable 206 est poussant. De plus, il est entraîné par le système de verrouillage qui doit prendre en compte le risque de grippage dans son dimensionnement .Cela peut conduire à surdimensionner le système, ce qui impactera négativement le coût et la masse de l'ensemble.

Dans ce troisième mode de réalisation, le pion 205 rétractable 206 peut servir de rampe et peut être positionné en interférence avec le cliquet 202 avant que ce dernier n'entre à son contact. C'est ensuite le vérin d'entraînement 101 du capot mobile 3 qui effectue l'escamotage du pion 205 rétractable. Le vérin 101 étant dimensionné pour des chargements plus importants, cet effort supplémentaire est transparent pour ledit vérin 101. La masse et le coût ne sont donc pas impactés.

Ainsi, dans une position proche de la refermeture complète du mode inversion de poussée, le moyen de détection 210 signale au système de verrouillage 2002 de déployer le pion 205. Ledit pion 205 est déployé avant que le cliquet 202 n'entre à son contact. Dans le même temps, le crochet 105 de verrouillage du panneau interne 4 sur le cadre avant 100 est engagé avec le doigt de verrouillage 106 de manière à venir interdire tout recul inopiné éventuel de la structure. Ainsi, la figure 12 montre une position transitoire dans laquelle il n'existe plus de structure mobile (capot mobile 3 et panneau interne 4) qui ne soit pas contenue, le dégagement complet du cliquet 202 n'étant effectué que lorsque le crochet 105 de verrouillage est totalement engagé.

## Revendications

1. Inverseur de poussée (1) pour nacelle de turboréacteur comprenant, d'une part, des moyens de déviation d'au moins une partie d'un flux d'air du turboréacteur, et d'autre part, au moins un capot mobile (3) en translation selon une direction sensiblement longitudinale de la nacelle apte à passer alternativement d'une position de fermeture dans laquelle il assure la continuité aérodynamique de la nacelle et couvre les moyens de déviation, et une position d'ouverture dans laquelle il ouvre un passage dans la nacelle et découvre les moyens de déviation, ledit inverseur de poussée comprenant également au moins une section de tuyère variable (3a) disposée dans le prolongement du capot mobile d'inversion de poussée et équipée d'au moins un moyen de verrouillage (201) apte à coopérer avec un moyen de verrouillage complémentaire du capot mobile d'inversion (3) de manière à lier mécaniquement ou non la section de tuyère mobile au capot mobile d'inversion, **caractérisé en ce que** le moyen de verrouillage et le moyen de verrouillage complémentaire comprennent au moins un cliquet (202) de verrouillage monté mobile à l'encontre d'un moyen de retour élastique (203) entre une position d'engagement dans laquelle il solidarise l'entraînement de la section de tuyère et du capot d'inversion, et une position de dégagement dans laquelle il désolidarise l'entraînement de ladite section de tuyère et dudit capot d'inversion, le moyen de retour élastique tendant à ramener le cliquet dans sa position d'engagement, ledit cliquet étant maintenu en position de dégagement par l'intermédiaire d'au moins un pion (205) monté sur une structure fixe de l'inverseur.

2. Inverseur de poussée (1) selon la revendication 1, **caractérisé en ce que** le pion (205) est monté mobile entre une position de maintien du cliquet (202) mobile et une position de retrait, le passage d'une position à l'autre étant associé à une situation de verrouillage ou de déverrouillage du capot mobile d'inversion (4) sur la structure fixe (100).

3. Inverseur de poussée (1) selon l'une quelconque des revendications 1 ou 2, **caractérisé en ce qu'**il comprend un moyen de détection (210) de fin de fermeture du capot mobile d'inversion.

4. Inverseur de poussée (1) selon l'une quelconque des revendications 1 à 3, **caractérisé en ce qu'**il comprend au moins un vérin (101) simple tige présentant une première extrémité monté sur la structure fixe (100) et une deuxième extrémité, d'entraînement, lié à la section de tuyère mobile.

5. Inverseur de poussée (1) selon l'une quelconque des revendications 1 à 4, **caractérisé en ce que** la structure fixe sur laquelle est montée le pion (205) est une poutre longitudinale, et plus particulièrement une poutre dite douze heure.

6. Inverseur de poussée (1) selon l'une quelconque des revendications 1 à 5, **caractérisé en ce que** le capot mobile d'inversion (3) est équipé d'au moins un moyen de verrouillage (106) avec une structure fixe de l'inverseur, notamment un cadre avant (100).

7. Inverseur de poussée (1) selon l'une quelconque des revendications 1 à 6, **caractérisé en ce que** les moyens de verrouillage (201, 202) sont situés dans une portion aval du capot mobile d'inversion (3).

8. Inverseur de poussée (1) selon l'une quelconque des revendications 1 à 7, **caractérisé en ce que** les moyens de verrouillage (201, 202) du capot mobile d'inversion (3) et / ou de la tuyère mobile (3a) sont montés sur une structure de guidage dudit capot mobile d'inversion et / ou de tuyère.

9. Inverseur de poussée (1) selon l'une quelconque des revendications 1 à 8, **caractérisé en ce que** le moyen de verrouillage (201) comprend au moins une butée articulée ou coulissante, située de préférence sensiblement au centre d'une section de la structure de guidage correspondante le cas échéant.

10. Nacelle de turboréacteur, **caractérisée en ce que** qu'elle comprend au moins un inverseur de poussée (1) selon l'une quelconque des revendications 1 à 9.

## Patentansprüche

1. Schubumkehr (1) für Turbostrahl-Triebwerksgondel umfassend, einerseits, Mittel zur Umleitung mindestens eines Teils eines Luftstroms des Turbostrahltriebwerks, und, andererseits mindestens eine bewegliche Haube (3) in Translation gemäß einer im Wesentlichen Längsrichtung der Gondel, dazu in der Lage, alternativ von einer Position des Verschlusses, in der sie die aerodynamische Güte der Gondel sicherstellt und die Mittel zur Umleitung abdeckt, in eine Position der Öffnung überzugehen, in der sie einen Durchgang in der Gondel öffnet und die Mittel zur Umleitung aufdeckt, wobei die Schubumkehr auch mindestens einen variablen Düsenabschnitt (3a) umfasst, der in der Verlängerung des beweglichen Haube zur Schubumkehr angeordnet und mit mindestens einem Verriegelungsmittel (201) ausgestattet ist, das ausgelegt ist, um mit einem zusätzlichen Verriegelungsmittel der beweglichen Umkehrhaube (3) zusammenzuarbeiten, um den beweglichen Düsenabschnitt des beweglichen mechanisch mit der beweglichen Umkehrhaube zu verbinden oder nicht, **dadurch gekennzeichnet, dass** das Verriegelungsmittel und das zusätzliche Verriegelungsmittel mindestens eine Sperrklinke (202) umfassen, die beweglich gegenüber einem elastischen Rückführungsmittel (203) montiert ist, zwischen einer Eingriffsposition, in der sie den Antrieb des Düsenabschnitts und der Umkehrhaube fest miteinander verbindet, und einer Position der Entkopplung, in der sie den Eingriff des Düsenabschnitts und der Umkehrhaube trennt, wobei das elastische Rückkehrmittel dazu neigt, die Klinke in ihre Eingriffsposition zurückzuführen, wobei die Klinke mit Hilfe mindestens eines Stifts (205) in der Entkoppelungsposition gehalten wird, der auf einer festen Struktur der Umkehr montiert ist.

2. Schubumkehr (1) nach Anspruch 1, **dadurch gekennzeichnet, dass** der Stift (205) beweglich zwischen einer Position der Beibehaltung der beweglichen Klinke (202) und einer Position des Rückzugs montiert ist, wobei der Übergang von einer Position in die andere mit einer Situation der Verriegelung oder der Entriegelung der beweglichen Umkehrhaube (4) auf der festen Struktur (100) assoziiert ist.

3. Schubumkehr (1) nach einem der Ansprüche 1 oder 2, **dadurch gekennzeichnet, dass** sie ein Mittel zum Nachweis (210) des Endes des Verschlusses der beweglichen Haube umfasst.

4. Schubumkehr (1) nach einem der Ansprüche 1 bis 3, **dadurch gekennzeichnet, dass** sie mindestens einen Zylinder (101) mit einfachem Schaft umfasst, der ein erstes Ende aufweist, das auf der festen Struktur (100) montiert ist, und eine zweites Antriebsende, das mit dem beweglichen Düsenabschnitt verbunden ist.

5. Schubumkehrer (1) nach einem der Ansprüche 1 bis 4, **dadurch gekennzeichnet, dass** die feste Struktur, auf der der Stift (205) montiert ist, ein Längsbalken ist, und insbesondere ein Balken, genannt 12-Uhr-Balken.

6. Schubumkehrer (1) nach einem der Ansprüche 1 bis 5, **dadurch gekennzeichnet, dass** die Umkehrhaube (3) mit mindestens einem Verriegelungsmittel (106) mit einer festen Struktur des Umkehrers, insbesondere einem vorderen Rahmen (100), ausgestattet ist.

7. Schubumkehrer (1) nach einem der Ansprüche 1 bis 6, **dadurch gekennzeichnet, dass** sich die Verriegelungsmittel (201, 202) in einem nachgeordneten Abschnitt der beweglichen Umkehrhaube (3) befinden.

8. Schubumkehrer (1) nach einem der Ansprüche 1 bis 7, **dadurch gekennzeichnet, dass** die Verriegelungsmittel (201, 202) der Umkehrhaube (3) und oder der bewegliche Düse (3a) auf einer Führungsstruktur der beweglichen Umkehrhaube und/oder der Düse montiert sind.

9. Schubumkehrer (1) nach einem der Ansprüche 1 bis 8, **dadurch gekennzeichnet, dass** das Verriegelungsmittel (201) mindestens einen gelenkigen oder gleitenden Anschlag umfasst, die sich gegebenenfalls vorzugsweise im Zentrum eines Abschnitts der entsprechenden Führungsstruktur befindet.

10. Turbostrahl-Triebwerksgondel, **dadurch gekennzeichnet, dass** sie mindestens einen Schubumkehrer (1) nach einem der Ansprüche 1 bis 9 umfasst.

## Claims

1. Thrust reverser (1) for a turbojet engine nacelle comprising, on the one hand, means for diverting at least a portion of an air flow of the turbojet engine, and on the other hand, at least one movable cowl (3) moving in translation according to a substantially longitudinal direction of the nacelle adapted to move alternately between a locking position wherein it ensures the aerodynamic continuity of the nacelle and covers the diverting means, and an open position wherein it opens a passage within the nacelle and uncovers the diverting means, said thrust reverser also comprising at least a variable nozzle section (3a) disposed in the extension of the movable thrust reversal cowl and equipped with at least one locking means (201) able to cooperate with a complementary locking means of the movable reversal cowl (3) such as to mechanically connect or not the movable nozzle section to the movable reversal cowl, **characterized in that** the locking means and the complementary locking means comprise at least one locking pawl (202) movably mounted against a springback means (203) between an engagement position wherein it secures driving of the nozzle section and the reversal cowl, and a disengagement position wherein it frees driving of said nozzle section and said reversal cowl, the springback means tending to bring the pawl back into its engagement position, said pawl being held in the disengagement position by means of at least one pin (205) mounted on a fixed structure of the reverser.

2. The thrust reverser (1) according to claim 1, **characterized in that** the pin (205) is movably mounted between a holding position of the movable pawl (202) and a retracted position, moving from one position to the other being associated with a locking or unlocking state of the movable reversal cowl (3) on the fixed structure (100).

3. The thrust reverser (1) according to any one of claims 1 or 2, **characterized in that** it comprises a detecting means (210) for detecting a closure completion of the movable reversal cowl.

4. The thrust reverser (1) according to any one of claims 1 to 3, **characterized in that** it comprises at least one single rod cylinder (101) having a first end mounted on the fixed structure (100) and a driving second end connected to the movable nozzle section.

5. The thrust reverser (1) according to any one of claims 1 to 4, **characterized in that** the fixed structure, whereon the pin (205) is mounted, is a longitudinal beam, and more particularly a so-called twelve hour beam.

6. The thrust reverser (1) according to any one of claims 1 to 5, **characterized in that** the movable reversal cowl (3) is equipped with at least one locking means (106) with a fixed structure of the reverser, in particular a front frame (100).

7. The thrust reverser (1) according to any one of claims 1 to 6, **characterized in that** the locking means (201, 202) are located in a downstream portion of the movable reversal cowl (3).

8. The thrust reverser (1) according to any one of claims 1 to 7, **characterized in that** the locking means (201, 202) of the movable reversal cowl (3) and / or of the movable nozzle (3a) are mounted on a guide structure of said movable reversal cowl and / or nozzle.

9. The thrust reverser (1) according to any one of claims 1 to 8, **characterized in that** the locking means (201) comprises at least one hinged or sliding abutment, preferably located substantially at the center of a section of the corresponding guide structure if applicable.

10. A turbojet engine nacelle, **characterized in that** it comprises at least one thrust reverser (1) according to any one of claims 1 to 9.
